# EUROPÄISCHE PATENTSCHRIFT

(11) **EP 3 406 181 B1**
(45) Veröffentlichungstag und Bekanntmachung des Hinweises auf die Patenterteilung: **27.11.2019**
(21) Anmeldenummer: 18172907.0
(22) Anmeldetag: 17.05.2018
(51) Int. Cl.: A47L 15/42, D06F 39/00

(54) **VERFAHREN ZUM BETRIEB EINES REINIGUNGSGERÄTS**
METHOD FOR OPERATING A CLEANING DEVICE
PROCÉDÉ DE FONCTIONNEMENT D'UN APPAREIL DE NETTOYAGE

(30) Priorität: 23.05.2017 DE 102017111187; 01.09.2017 DE 102017120171
(43) Veröffentlichungstag der Anmeldung: 28.11.2018
(73) Patentinhaber: Miele & Cie. KG, 33332 Gütersloh (DE)
(72) Erfinder: Dahms, Tobias, 30519 Hannover (DE); Bertram, Andre, 33609 Bielefeld (DE); Nierling, Andreas, 49326 Melle (DE); Sgurski, Eugen, 33649 Bielefeld (DE); Reilmann, Michael, 33659 Bielefeld (DE); Steinmeier, Ralph, 32052 Herford (DE); Dettmer, Martin, 33607 Bielefeld (DE); Wolf, Cornelius, 33739 Bielefeld (DE)

(56) Entgegenhaltungen:
- EP-A1- 3 141 176
- DE-A1-102015 203 532
- DE-B3-102015 116 553

## Beschreibung

Die Erfindung betrifft ein Verfahren zum Betrieb eines Reinigungsgeräts, insbesondere einer Wasch- oder Geschirrspülmaschine, mit einem einen Reinigungsraum, insbesondere Spülraum bereitstellenden Reinigungsbehälter, insbesondere Spülbehälter und einer Wärmepumpeneinrichtung, die einen innerhalb eines Wassertanks angeordneten Verdampfer aufweist. Ferner betrifft die Erfindung ein Reinigungsgerät, insbesondere eine Wasch- oder Geschirrspülmaschine, insbesondere eine Haushaltsgeschirrspülmaschine, mit einem einen Reinigungsraum bereitstellenden Reinigungsbehälter und einer Wärmepumpeneinrichtung, die einen innerhalb eines Wassertanks angeordneten Verdampfer aufweist.

Ein gattungsgemäßes Reinigungsgerät ist aus der EP 3 141 176 A1 bekannt.

Die darin beschriebene Geschirrspülmaschine verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dgl. handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülgutes mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe verworfen und abgepumpt.

Geschirrspülmaschinen können bekanntermaßen mit einer Wärmepumpeneinrichtung ausgestattet sein, um den Energieverbrauch insbesondere bei einem Aufheizen der Spülflotte zu reduzieren.

Die aus der EP 3 141 176 A1 bekannte Geschirrspülmaschine verfügt über eine sogenannte Wasser-Wasser-Wärmepumpeneinrichtung. Im bestimmungsgemäßen Verwendungsfall wird mit einer solchen Wärmepumpeneinrichtung einem Flüssigkeitsreservoir Wärmeenergie entzogen. Die EP 3 141 176 A1 sieht zu diesem Zweck einen offenen Wassertank vor, der den Verdampfer der Wärmepumpeneinrichtung beherbergt. Im Betriebsfall kommt es infolge eines Wärmeenergieentzugs zu einer Abkühlung des im Tank als Wärmeträgermedium bevorrateten Wassers. Eine solche Abkühlung kann bis zur Vereisung des Wassers vorgenommen werden.

Von grundsätzlicher Problematik bei der Verwendung einer Wasser-Wasser-Wärmepumpeneinrichtung ist, dass ein bestimmungsgemäßer Einsatz der Geschirrspülmaschine unter gleichzeitiger Nutzung der Wärmepumpeneinrichtung energetisch nur dann sinnvoll ist, wenn das im Wassertank bevorratete und als Wärmeträgermedium dienende Wasser eine gewisse Mindesttemperatur aufweist. Sollte das Wasser nach einer vorangegangenen Geschirrspülmaschinenbenutzung noch zu kühl oder sogar gefroren sein, muss mit einem bestimmungsgemäßen Einsatz der Wärmepumpeneinrichtung bis zum Erreichen der Mindesttemperatur des Wassers gewartet werden, was bei noch gefrorenem Wasser durchaus 24 Stunden in Anspruch nehmen kann. Eine bestimmungsgemäße Verwendung der Geschirrspülmaschine unter Einsatz der Wärmepumpeneinrichtung ist mithin pro Tag nur einmal möglich.

Um diesem Problem zu begegnen, ist mit der EP 3 141 176 A1 unter anderem vorgeschlagen worden, innerhalb des Wassertanks einen Wärmetauscher anzuordnen. Dieser Wärmetauscher ist strömungstechnisch an den Spülraum angeschlossen, so dass zum Ende eines Spülprogramms noch warme Spülflotte durch den Wärmetauscher gepumpt werden kann, bevor sie zur Beendigung des Spülprogramms durch Abpumpen verworfen wird. Der Wärmetauscher erlaubt mithin eine Energierückführung aus der noch warmen, aber nicht mehr benötigten Spülflotte auf das im Tank bevorratete Wasser.

Die DE 102015203532 A1 offenbart eine Geschirrspülmaschine, bei der Frischwasser einem seitlich am Spülbehälter angeordneten Wassertank zugeleitet wird und von dort aus über einen Überlauf in den Spülbehälter fließt. Im Wassertank ist der Verdampfer einer Wärmepumpeneinrichtung angeordnet.

Die DE 102015116553 B1 offenbart ebenfalls eine Geschirrspülmaschine, bei der Frischwasser einem seitlich am Spülbehälter angeordneten Wassertank zugeleitet wird und von dort aus über einen Überlauf in den Spülbehälter fließt. Durch den Wassertank ist ein eingangs- und ausgangsseitig mit dem Spülbehälter verbundenes Wärmetauscherrohr verlegt.

Es ist die **Aufgabe** der Erfindung, eine Konstruktion vorzuschlagen, die eine energetisch noch effektivere Verfahrensdurchführung gestattet.

Zur **Lösung** dieser Aufgabe wird mit der Erfindung ein Verfahren zum Betrieb eines Reinigungsgeräts mit den Merkmalen von Asnpruch 1 vorgeschlagen.

Der erfindungsgemäßen Verfahrensdurchführung liegt die Erkenntnis zugrunde, dass es energetisch effizienter ist, dem Reinigungsbehälter vor Beginn einer Reinigungsflottenaufheizung Wasser mit einer höchst möglichen Wassertemperatur zuzuführen. Mit der Erfindung wird deshalb vorgeschlagen, dass dem Reinigungsbehälter vor Beginn eines, insbesondere ersten Reinigungsprogrammschritts, demgemäß ein Aufheizen der Reinigungsflotte stattfindet, anstelle von Frischwasser, welches ohne es zu bevorraten direkt aus der hausseitigen Wasserversorgungseinrichtung bezogen wurde, im Wassertank der Wärmepumpeneinrichtung bevorratetes Wasser zugeführt wird. Denn im Unterschied zu Frischwasser, das typischerweise eine Temperatur von ca. 15°C aufweist, besitzt das im Wassertank der Wärmepumpeneinrichtung bevorratete Wasser Raumtemperatur, die typischerweise zwischen 20°C und 23°C liegt. Das im Wassertank der Wärmepumpeneinrichtung bevorratete Wasser ist also typischerweise wärmer als Frischwasser, so dass im nachfolgenden Programmschritt des Aufheizens weniger Energie zur Erreichung einer Reinigungsflottenzieltemperatur benötigt wird. Dabei ist der erste Programmschritt eines Reinigungsprogramms, demgemäß ein Aufheizen vom im Reinigungsbehälter befindlicher Reinigungsflotte stattfindet, regelmäßig der nach einem optionalen Vorspülen stattfindende Programmschritt des Reinigens.

Für einen bestimmungsgemäßen Betrieb der Wärmepumpeneinrichtung bedarf es einer Wiederauffüllung des Wassertanks. Erfindungsgemäß findet indes nicht ein Entleeren des Wassertanks gefolgt von einer Wiederauffüllung statt, sondern es ist vielmehr vorgesehen, dem Wassertank Frischwasser zuzuführen, und zwar so viel, dass es zu einem Überlaufen des Wassertanks kommt. Infolge dieses Überlaufens wird im Wassertank bevorratetes Wasser ausgetrieben, welches dann dem Reinigungsbehälter zugeführt wird. Bei dem Frischwasser, das dem Wassertank zugeführt wird, handelt es sich um Wasser, welches unter Umgehung des Reinigungsraums, also insbesondere ohne dass es in einem Programmschritt bereits als Reinigungsflotte verwendet wurde, von der hausseitigen Wasserversorgungseinrichtung in den Wassertank gelangt. Dabei kann es sich um Hartwasser handeln vorzugsweise handelt es sich jedoch um Weichwasser, also bereits im Wassereinlauf des Reinigungsgeräts, insbesondere der Geschirrspülmaschine mittels einer Enthärtungseinrichtung enthärtetes Wasser. Es kann auch aus einem weiteren Vorratsbehälter für Frischwasser, etwa einer sogenannten Wassereinlauftasche stammen.

Der wassertankseitige Einlaufstutzen für das Frischwasser ist idealer Weise mit Bezug auf die Höhenrichtung des Reinigungsgeräts bzw. der Geschirrspülmaschine im unteren Bereich des Wassertanks angeordnet oder ist im Wassertank nach unten geführt. Denn das im Betriebsfall in den Wassertank einströmende Frischwasser ist typischerweise kälter als das vom Wassertank bevorratete Wasser. Da das kältere Frischwasser eine höhere Dichte als das im Wassertank befindliche, auf Raumtemperatur vorgewärmte Wasser aufweist, drückt das Frischwasser mit seiner Einleitung in den Wassertank das dort befindliche wärmere Wasser nach oben, so dass es zu einem Überlauf von vorgewärmtem Wasser über einen entsprechenden Überlaufstutzen kommt. Das so aus dem Wassertank ausgetriebene Wasser wird dem Reinigungsbehälter als Reinigungsflotte zugeführt.

Gemäß der Erfindung ist vorgesehen, dass der Überlauf des Wassertanks so ausgebildet ist, dass im Wassertank stets ein Luftpolster zwischen dem Wasserpegel des vom Wassertank aufgenommenen Wassers und der oberen Abschlusswand des Wassertanks ausgebildet ist. Dieses Luftpolster sorgt für eine thermische Entkoppelung von Reinigungsbehälter und Wassertank, so dass ein ungewollter Wärmeeintrag vom Reinigungsbehälter bzw. der davon bevorrateten Reinigungsflotte in den Wassertank bzw. in das vom Wassertank bevorratete Wasser ausgeschlossen ist. Das zwischen dem Wasserpegel des vom Wassertank aufgenommenen Wassers und der oberen Abschlusswand des Wassertanks angeordnete Luftpolster erstreckt sich dabei vorzugsweise über einen wesentlichen Teil der oberen Abschlusswand des Wassertanks oder aber über die gesamte obere Abschlusswand des Wassertanks.

Alternativ ist vorgesehen, dass der Wassertank stets vollständig mit Wasser befüllt ist. Gemäß dieser Variante ist der Überlauf des Wassertanks so ausgebildet, dass ein Überlaufen von Wasser nur bei vollständig befülltem Wassertank stattfinden kann. Diese Ausführungsform ist bevorzugt, da es keiner zusätzlichen Pumpen und/oder Saugheber bedarf, denn es sorgt allein der Druck, unter dem das Frischwasser steht, dafür, dass bei bestimmungsgemäßer Einleitung von Frischwasser in den Wassertank dort befindliches Wasser aus dem Wassertank gedrückt wird, es also zu einem Überlaufen von Wasser kommt, das dem Reinigungsbehälter über eine einfach ausgebildete Verschlauchung und/oder Verrohrung zugeführt wird.

Da bei einer vollständigen Befüllung des Wassertanks mit Wasser kein thermisch isolierendes Luftpolster zwischen Reinigungsbehälter und dem vom Wassertank bevorrateten Wasser ausgebildet ist, wird mit der Erfindung vorgeschlagen, zwischen dem Reinigungsbehälter und dem Wassertank eine Wärmedämmung auszubilden. Diese kann beispielsweise als Wärmedämmschicht ausgebildet und unterseitig des Reinigungsbehälters am Reinigungsbehälter oder oberseitig des Wassertanks am Wassertank angeordnet sein.

Mit der erfindungsgemäßen Verfahrensdurchführung wird insgesamt ein Betrieb eines Reinigungsgeräts, insbesondere einer Geschirrspülmaschine ermöglicht, der energieeffizienter ist. Im Unterschied zum Stand der Technik kann in vorteilhafter Weise bei gleichbleibender Funktionalität eine Energieeinsparung erreicht werden. Dies dadurch, dass dem Reinigungsbehälter nicht vergleichsweise kaltes Frischwasser, sondern typischerweise auf Raumtemperatur vorgewärmtes Wasser aus dem Wassertank der Wärmepumpeneinrichtung zugeführt wird. Bei dem nachfolgenden Aufheizschritt des Reinigungsprogramms wird aufgrund dessen weniger Energie benötigt, so dass sich ein insgesamt energieeffizienterer Reinigungs- oder Spülbetrieb einstellt.

Zwar gestaltet sich auch ein Betrieb der Wärmepumpeneinrichtung mit wärmerem Wasser als Frischwasser als effektiver, doch wurde erfindungsgemäß erkannt, dass es energetisch insgesamt effizienter ist, dem Reinigungs- oder Spülprozess Wärmeenergie in Form von vorgewärmtem Wasser zuzuführen, als durch eine höhere Wassertemperatur im Wassertank der Wärmepumpeneinrichtung einen kurzzeitigen effizienteren Betrieb der Wärmepumpeneinrichtung zu ermöglichen. Erfindungsgemäß ist deshalb auch vorgesehen, dass im Wassertank der Wärmepumpeneinrichtung bevorratete und auf Raumtemperatur vorgewärmte Wasser dem Reinigungsbehälter als Reinigungsflotte zuzuführen.

Bei einer vollständigen Befüllung des Reinigungsbehälters mit vorgewärmtem Wasser aus dem Wassertank der Wärmepumpeneinrichtung, das beispielsweise eine Temperatur von 23°C aufweist, bleibt die Mischtemperatur des in den Reinigungsbehälter eingeleiteten Wassers bei 23°C. Erfolgt stattdessen im Unterschied hierzu ein Wassereinlauf in den Reinigungsbehälter mit unmittelbar aus der hausseitigen Wasserversorgungseinrichtung bezogenem Frischwasser, das eine Temperatur von z.B. 15°C aufweist, so stellt sich - unter Berücksichtigung des etwa auf Raumtemperatur befindlichen Reinigungsbehälters, des Reinigungsguts und der Reinigungsflottenleitungen - im Reinigungsbehälter eine Mischtemperatur des Wassers von ca. 20°C bis 21°C ein. Durch die demgegenüber nach der erfindungsgemäßen Verfahrensdurchführung sich einstellende um ca. 2 bis 3° C höhere Temperatur des Wassers im Reinigungsraum reduziert sich der Energieverbrauch um ca. 3 bis 8 Wh und die Reinigungsprogrammzeit verkürzt sich um ca. 2 bis 3 min. Insofern erweist sich die erfindungsgemäße Verfahrensdurchführung als gegenüber dem Stand der Technik energieeffizienter.

Gemäß einem weiteren Merkmal der Erfindung ist vorgesehen, dass dem Wassertank Frischwasser in einer solchen Menge zugeführt wird, dass in den Reinigungsbehälter Wasser in einer Menge überläuft, dass sich im Reinigungsbehälter die für eine Durchführung des Programmschritts benötigte Menge an Reinigungsflotte ansammelt.

Gemäß dieser Verfahrensdurchführung ist vorgesehen, dass sich die in den Reinigungsbehälter einzubringende Reinigungsflotte vollständig aus dem Wasser des Wassertanks rekrutiert. Eine zusätzliche Direkteinspeisung von Frischwasser in den Reinigungsbehälter findet demgemäß nicht statt. Die für die ordnungsgemäße Durchführung des Programmschritts benötigte Menge an Reinigungsflotte wird dem Wassertank der Wärmepumpeneinrichtung als Frischwasser zugeführt. Hierdurch bedingt wird eine entsprechende Menge an Wasser über den Überlauf des Wassertanks in den Reinigungsbehälter gefördert.

Gemäß einer weiteren Ausgestaltung des erfindungsgemäßen Verfahrens wird die Temperatur des im Wassertank bevorrateten Wassers sensiert oder ein von der Temperatur des im Wassertank bevorrateten Wassers beeinflusster Parameter bestimmt. Dies kann durch einen im Wassertank angeordneten Temperatursensor erfolgen. Um den Wassertank jedoch besonders einfach, robust und wenig störanfällig auszubilden, findet im Wassertank selbst keine Temperatursensierung statt, vorzugsweise ist der Wassertank sensorlos ausgebildet. Stattdessen wird auf die Temperatur des im Wassertank bevorrateten Wassers durch eine Temperaturmessung im Reinigungsbehälter, insbesondere im Sammeltopf, geschlossen. Hierfür kann ein ohnehin zur Messung und Kontrolle der Reinigungsflottentemperatur dort vorgesehener Temperatursensor eingesetzt werden, so dass ein ansonsten erforderlicher zusätzlicher Sensor eingespart werden kann. Der Temperatursensor nimmt eine Messung eines Temperaturwerts vor, während Wasser entsprechend des erfindungsgemäßen Verfahrens aus dem Wassertank in den Reinigungsbehälter bzw. den Sammeltopf einfließt oder unmittelbar nachdem eine erste Wassermenge entsprechend des erfindungsgemäßen Verfahrens aus dem Wassertank in den Reinigungsbehälter bzw. den Sammeltopf eingeflossen ist. Dabei ist die erste Wassermenge vorzugsweise wesentlich kleiner als eine für den ersten Programmschritt eines Reinigungsprogramms bzw. den Programmschritt REINIGEN erforderliche Wassermenge, und/oder beträgt die erste Wassermenge weniger als 1 Liter, insbesondere 300 bis 900 ml, vorzugsweise 500 bis 700 ml.

Vorzugsweise nimmt der Temperatursensor darüber hinaus zuvor bereits eine Messung eines Temperaturausgangswerts vor, nämlich unmittelbar bevor das Wasser entsprechend des erfindungsgemäßen Verfahrens aus dem Wassertank in den Reinigungsbehälter bzw. den Sammeltopf einfließt.

Nach Messung des Temperaturausgangswerts und des Temperaturwerts vergleicht eine Steuereinrichtung des Reinigungsgeräts die festgestellte Temperaturabsenkung bzw. Temperaturdifferenz zwischen diesen Werten mit einem vorgegebenen oder vorgebbaren, in der Geräteelektronik hinterlegten ersten Grenzwert. Abhängig davon, ob die Temperaturdifferenz diesen ersten Grenzwert überschreitet oder nicht, wird das Reinigungsprogramm in unterschiedlicher Weise weitergeführt. Ist der erste Grenzwert nicht überschritten, wird die Wassereinleitung aus dem Wassertank in den Reinigungsbehälter bzw. den Sammeltopf fortgesetzt, d.h. eine weitere Wassermenge aus dem Wassertank in den Reinigungsbehälter bzw. den Sammeltopf geleitet. Ist der erste Grenzwert dagegen überschritten, wird in dem Reinigungsprogramm kein Wasser aus dem Wassertank in den Reinigungsbehälter bzw. den Sammeltopf geleitet, sondern die restliche für das Reinigungsprogramm erforderliche Wassermenge aus der hausseitigen Frischwasserversorgung unter Umgehung des Wassertanks in den Reinigungsbehälter bzw. den Sammeltopf geleitet. Durch diese unterschiedliche Verfahrensführung kann verhindert werden, dass im Falle einer unzureichenden thermischen Regeneration des Wassertanks eine große Menge von sehr kaltem Wasser in den Reinigungsbehälter eingelassen wird, was die Energieeffizienz des Verfahrens verschlechtern würde.

Alternativ oder zusätzlich kann die Steuereinrichtung nach Messung des Temperaturausgangswerts und des Temperaturwerts die festgestellte Temperaturabsenkung bzw. Temperaturdifferenz zwischen diesen Werten mit einem vorgegebenen oder vorgebbaren, in der Geräteelektronik hinterlegten zweiten Grenzwert vergleichen. Ist der zweite Grenzwert nicht überschritten, wird im nachfolgenden Programmschritt des Reinigungsprogramms die Wärmepumpeneinrichtung betrieben, um die Reinigungsflotte aufzuheizen. Ist der zweite Grenzwert dagegen überschritten, wird die Wärmepumpeneinrichtung in dem Reinigungsprogramm dagegen nicht betrieben. Stattdessen erfolgt in diesem Reinigungsprogramm die Aufheizung der Reinigungsflotte mit einer anderen Heizeinrichtung.

Der erste und zweite Grenzwert können identisch gewählt sein. In diesem Fall wird bei Überschreiten des Grenzwertes zum einen kein Wasser mehr aus dem Wassertank in den Reinigungsbehälter bzw. den Sammeltopf geleitet, zum anderen die Wärmepumpeneinrichtung in dem Reinigungsprogramm nicht betrieben.

Alternativ ist der zweite Grenzwert höher als der erste Grenzwert. In diesem Fall gibt es nach Feststellung der Temperaturdifferenz und Vergleich mit den beiden Grenzwerten drei Verfahrensalternativen. Bei Unterschreiten des ersten Grenzwertes wird die Wassereinleitung aus dem Wassertank in den Reinigungsbehälter bzw. den Sammeltopf fortgesetzt und im nachfolgenden Programmschritt des Reinigungsprogramms wird die Wärmepumpeneinrichtung betrieben, um die Reinigungsflotte aufzuheizen. Bei Überschreitung des ersten Grenzwertes nicht aber des zweiten Grenzwertes wird zwar kein Wasser mehr aus dem Wassertank in den Reinigungsbehälter bzw. den Sammeltopf geleitet, im nachfolgenden Programmschritt des Reinigungsprogramms die Wärmepumpeneinrichtung jedoch betrieben, um die Reinigungsflotte aufzuheizen. Bei Überschreiten auch des zweiten Grenzwertes wird sowohl kein Wasser mehr aus dem Wassertank in den Reinigungsbehälter bzw. den Sammeltopf geleitet, als auch die Wärmepumpeneinrichtung in dem Reinigungsprogramm nicht betrieben.

Während eines bestimmungsgemäßen Betriebs der Wärmepumpeneinrichtung kommt es zu einem Abkühlen des im Wassertank bevorrateten Wassers, bis hin zum zumindest teilweisen Einfrieren. Infolge eines solchen Einfrierens kommt es zu einem Ausdehnen des zu Eis gefrierenden Wassers. Um ein Bersten des Wassertanks zu vermeiden, ist eine Überlaufleitung vorgesehen, die den Wassertank mit dem Reinigungsbehälter strömungstechnisch verbindet. Kommt es im bestimmungsgemäßen Verwendungsfall der Wärmepumpeneinrichtung zu einem zumindest teilweisen Einfrieren des im Wassertank bevorrateten Wassers, so kann über diese Überlaufleitung Eiswasser aus dem Wassertank in den Reinigungsbehälter überführt werden, womit ein Bersten des Wassertanks sicher vermieden ist.

Das Vorsehen einer Überlaufleitung ist in vorteilhafter Weise konstruktiv einfach. Es ergibt sich allerdings verfahrensseitig der Nachteil, dass dem Reinigungsbehälter während der Durchführung eines Reinigungs- oder Spülprozesses zwecks Volumenausgleich Eiswasser zugeführt wird. Und dies zu einem Zeitpunkt, zu dem ein bestimmungsgemäßer Betrieb der Wärmepumpeneinrichtung stattfindet, d.h. zu einem Zeitpunkt, zu dem die Reinigungsflotte bestimmungsgemäß aufgeheizt wird. Von Nachteil ist ferner, dass dem Wassertank infolge eines Überlaufens von Eiswasser aus dem Wassertank in den Reinigungsbehälter Wasser verloren geht, was mit Beginn eines nächsten Reinigungsprogramms zunächst einmal wieder aufzufüllen ist. Dem Wassertank ist folglich mehr Frischwasser zuzuführen, als dem Reinigungsbehälter Wasser über den Überlauf zugeführt wird. Um gleichwohl sicherzustellen, dass dem Reinigungsbehälter hinreichend viel Wasser für die ordnungsgemäße Durchführung eines Programmschritts zugeführt wird, bedarf es einer entsprechenden messtechnischen Erfassung.

Um die vorbeschriebenen Nachteile zu vermeiden, wird mit der Erfindung vorgeschlagen, dass in eine oder in die Überlaufleitung ein Ausgleichsbehälter integriert ist. Im bestimmungsgemäßen Betriebsfalls der Wärmepumpeneinrichtung dient der Ausgleichsbehälter dem Wassertank der Wärmepumpeneinrichtung als Ausgleichsvolumen; der Wassertank wird im Betriebsfall der Wärmepumpeneinrichtung in den Ausgleichsbehälter entwässert. Anders ausgedrückt wird die Wärmepumpeneinrichtung derart betrieben, dass die im Wassertank befindliche Wassermenge zumindest teilweise gefriert. Die dadurch bedingte Volumenvergrößerung des Wassers sorgt dafür, dass eine im Einfrierfall dem Wassertank entstammende Wassermenge, also eine Teilmenge des im Wassertank bevorrateten Wassers, dem Ausgleichsbehälter zugeführt, bzw. in den Ausgleichsbehälter gedrückt und hier temporär zwischengespeichert wird. Kommt es nach einem Abschluss eines Betriebs der Wärmepumpeneinrichtung zu einem Auftauen des im Wassertank befindlichen Wassers, so kann das im Ausgleichsbehälter zwischengespeicherte Wasser zurück in den Wassertank der Wärmepumpeneinrichtung strömen. Diese Konstruktion hat mithin den Vorteil, dass weder dem Reinigungsbehälter während der Durchführung eines Reinigungsprogramms Eiswasser zugeführt wird, noch dass dem Wassertank der Wärmepumpeneinrichtung Wasser verloren geht.

Gemäß einem weiteren Ausführungsbeispiel sind zwei Überlaufleitungen vorgesehen. Über die erste Überlaufleitung wird im bestimmungsgemäßen Befüllvorgang aus dem Wassertank überlaufendes Wasser als Reinigungsflotte dem Reinigungsbehälter zugeführt. Im bestimmungsgemäßen Betriebsfall der Wärmepumpeneinrichtung kann es infolge einer Eisbildung im Wassertank zu einem Überlauf des Wassertanks kommen, wobei dieses überlaufende Wasser über die zweite Überlaufleitung geführt wird. In diese zweite Überlaufleitung ist ein Ausgleichsbehälter integriert, so dass es im bestimmungsgemäßen Anwendungsfall nicht zu einem Überlauf des Wassers in den Reinigungsbehälter, sondern in den Ausgleichsbehälter kommt. Nach einem Auftauen von im Wassertank befindlichem Eis kann das im Ausgleichsbehälter zwischengespeicherte Wasser zurück in den Wassertank strömen, so dass es dem Wassertank nicht verloren geht. Um sicherzustellen, dass im bestimmungsgemäßen Verwendungsfall der Wärmepumpeneinrichtung kein Wasser über die erste Überlaufleitung in den Reinigungsbehälter geführt wird, ist die erste Überlaufleitung fluiddicht absperrbar. Auch die zweite Überlaufleitung kann ausgangsseitig des Ausgleichsbehälters mit dem Reinigungsbehälter strömungstechnisch verbunden sein. Hierdurch ist eine hohe Ausfallsicherheit gewährleistet, da der Wassereinlauf beispielsweise bei defektem Ventil in der ersten Überlaufleitung notfalls über den Ausgleichsbehälter und die zweite Überlaufleitung erfolgen kann.

Vorrichtungsseitig wird zur **Lösung** der vorstehenden Aufgabe ein Reinigungsgerät mit den Merkmalen von Anspruch 7 vorgeschlagen.

Diese konstruktive Ausgestaltung ermöglicht es, dass bei einer Befüllung des Reinigungsbehälters mit Reinigungs- oder Spülflotte, etwa zu Beginn eines Reinigungsprogramm, Frischwasser über die Frischwasserzufuhr nicht unmittelbar dem Reinigungsbehälter, sondern in den Wassertank eingeleitet wird. Infolge dessen kommt es zu einem Überlaufen des Wassertanks, wobei das überlaufende Wasser dem Reinigungsbehälter mittels der, insbesondere ersten Überlaufleitung zugeführt wird.

Die Überlaufleitung ist gemäß einem weiteren Ausführungsbeispiel der Erfindung fluidtechnisch verschließbar, was es gestattet, die Überlaufleitung programmgesteuert zu öffnen oder zu schließen.

Gemäß einem weiteren Merkmal der Erfindung ist vorgesehen, dass die erste Überlaufleitung oder eine zweite Überlaufleitung, an die der Wassertank ebenfalls strömungstechnisch angeschlossen ist, der Ausbildung einer strömungstechnischen Verbindung zwischen dem Wassertank und einem Ausgleichsbehälter dient. Kommt es infolge eines bestimmungsgemäßen Betriebs der Wärmepumpeneinrichtung zu einem zumindest teilweisen Einfrieren des im Wassertank befindlichen Wassers, so bedingt die hiermit einhergehende Volumenänderung einen Austritt von Wasser aus dem Wassertank, welches dem Ausgleichsbehälter über die erste oder zweite Überlaufleitung zugeführt werden kann. Hier findet dann bis zu einem Wiederauftauen ein Zwischenspeichern statt.

Aus Platzgründen ist der Wassertank dabei unterhalb des Reinigungsbehälters angeordnet, insbesondere im Sockelbereich des Reinigungsgeräts bzw. der Geschirrspülmaschine .

Gemäß einer weiteren Ausführungsform ist der Ausgleichsbehälter oberhalb des Wassertanks angeordnet. Dadurch kann das im Ausgleichsbehälter zwischengespeicherte Wasser der Schwerkraft folgend über die erste oder zweite Überlaufleitung in den Wassertank zurückströmen. Zusätzlicher Mittel, insbesondere Pumpen zur Überführung von Wasser aus dem Vorratsbehälter in den Wassertank bedarf es insofern nicht.

Vorzugsweise ist der Ausgleichsbehälter vollständig oder zumindest größtenteils seitlich des Reinigungsbehälters, insbesondere im Spaltraum zwischen Reinigungsbehälter und dem Gehäuse des Reinigungsgeräts, insbesondere der Geschirrspülmaschine angeordnet. Dabei kann der insbesondere unterhalb des Reinigungsbehälters angeordnete Wassertank und der oberhalb des Wassertanks angeordnete Ausgleichsbehälter einstückig ausgebildet sein und somit ein Wasserbevorratungsbehältnis gemeinschaftlich ausbilden. Alternativ bilden der Wassertank und der Ausgleichsbehälter zwei voneinander getrennte Bauteile, die beispielsweise über eine Schlauch- oder Rohrverbindung in strömungstechnischer Verbindung stehen.

In einer weiteren Ausführungsform ist der Ausgleichsbehälter thermisch vom Reinigungsraum entkoppelt. Insbesondere befindet sich zwischen Reinigungsbehälter und Ausgleichsbehälter eine Wärmedämmung. Vorzugsweise weist der Ausgleichsbehälter hierfür auf seiner dem Reinigungsbehälter zugewandten Seite eine Isolierung auf. Hierdurch wird ein Abkühlen der aufgeheizten Reinigungsflotte durch aufsteigendes Eiswasser verhindert.

In einer weiteren Ausführungsform ist der Ausgleichsbehälter wärmeleitend mit dem Gehäuse des Reinigungsgeräts bzw. der Geschirrspülmaschine verbunden. Durch diese Wärmeleitung wird ein schnelles Aufwärmen des aufsteigenden bzw. aufgestiegenen Wassers im Ausgleichsbehälter über die Umgebung (Raumluft / Küchenkorpus) ermöglicht.

Zur thermischen Isolation von Reinigungsbehälter und Wassertank ist ferner vorgesehen, dass zwischen Reinigungsbehälter und Wassertank eine Wärmedämmung ausgebildet ist.

Das Volumen des Wassertanks sollte das 1 bis 3-fache, insbesondere 1,25-fache bis 1,75-fache, besonders bevorzugt ca. das 1,5-fache der Wassermenge eines Reinigungsprogrammabschnitts, insbesondere des Spülprogrammabschnitts REINIGEN, betragen. Diese kann beispielsweise etwa 3 Liter betragen. Vorzugsweise beträgt das Volumen des Wassertanks 3 bis 7 Liter, insbesondere 3,5 bis 5,5 Liter.

Der wassertankseitige Einlassstutzen, mit dem der Wassertank strömungstechnisch an die Frischwasserleitung, also die hausseitige Wasserversorgungseinrichtung angeschlossen ist, ist gemäß einem weiteren Merkmal der Erfindung in Schwerkraftrichtung in einem unteren Bereich des Wassertanks angeordnet. Der Auslassstutzen, mit dem die Überlaufleitung, über die das überlaufende Wasser in den Reinigungsbehälter gelangt, an den Wassertank angeschlossen ist, ist in Schwerkraftrichtung in einem oberen Bereich oder an einer Oberseite des Wassertanks angeordnet. Somit wird eine Temperaturschichtung innerhalb des Wassertanks unterstützt. Beim Wassereinlauf drückt das in den Wassertank einströmende kalte Frischwasser das im Wassertank bevorratete und durch die Bevorratung vorgewärmte Wasser in den Reinigungsbehälter.

Damit sich der energetische Vorteil durch die Temperaturschichtung und damit ein möglichst warmer Wasserzulauf in den Reinigungsbehälter ergibt, sollte eine niedrige Wassereinlaufgeschwindigkeit in den Wassertank gewählt werden. Insbesondere können im Wassertank eingangsseitig hierfür Strömungsgleichrichter und/oder Strömungsberuhiger wie z.B. Lamellen oder ein Diffusor vorgesehen werden.

Vorzugsweise liegt der Volumenstrom, mit dem Frischwasser in den Wassertank einströmt, unterhalb von 4 Liter/Minute, insbesondere im Bereich von 1 bis 4 Liter/Minute, besonders bevorzugt zwischen 2 bis 3 Liter/Minute. Gemäß einer vorteilhaften Ausführung ist eine Aufweitung des Strömungsquerschnitts und/oder ein Diffusor im Tankeinlauf vorhanden, welche die Strömungsgeschwindigkeit herabsetzt. Um eine optimale Einschichtung des zulaufenden Wassers zu erreichen, ist der Tankeinlauf derart ausgebildet, dass die Strömung des einlaufenden Wassers im Bereich hinter der Aufweitung du/oder dem Diffusor eine Strömungsgeschwindigkeit von weniger als 0,2 m/s, insbesondere 0,01 bis 0,1 m/s aufweist.

Weitere Merkmale und Vorteile der Erfindung ergeben sich aus der nachfolgenden Beschreibung anhand der Figuren. Dabei zeigen
- Fig. 1 bis 4: jeweils in schematischer Darstellung ein für eine erfindungsgemäße Verfahrensdurchführung entsprechend ausgerüstetes Reinigungsgerät in der Ausgestaltung als Geschirrspülmaschine in einer jeweiligen Ausführungsform und
- Fig. 5: in schematischer Darstellung eine Geschirrspülmaschine nach dem Stand der Technik.

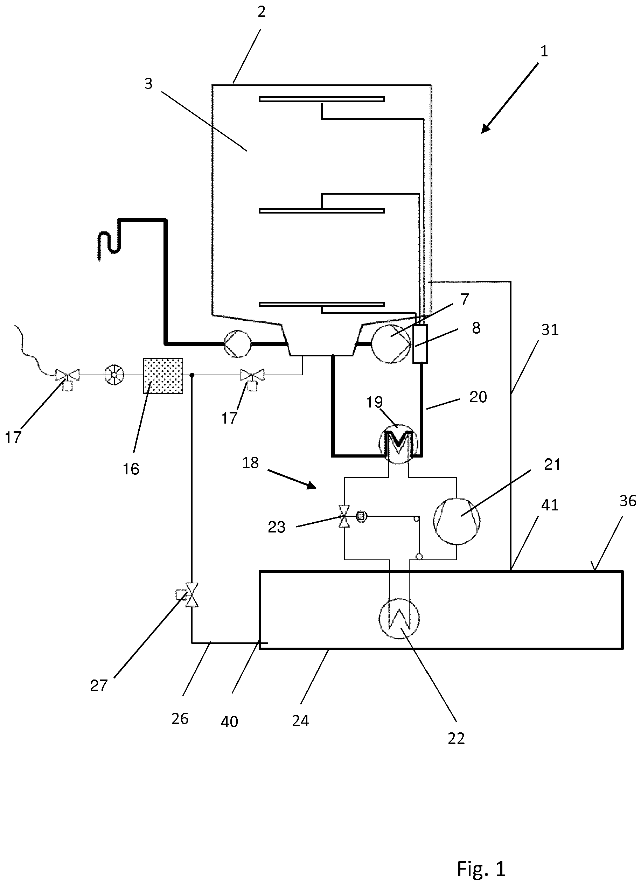

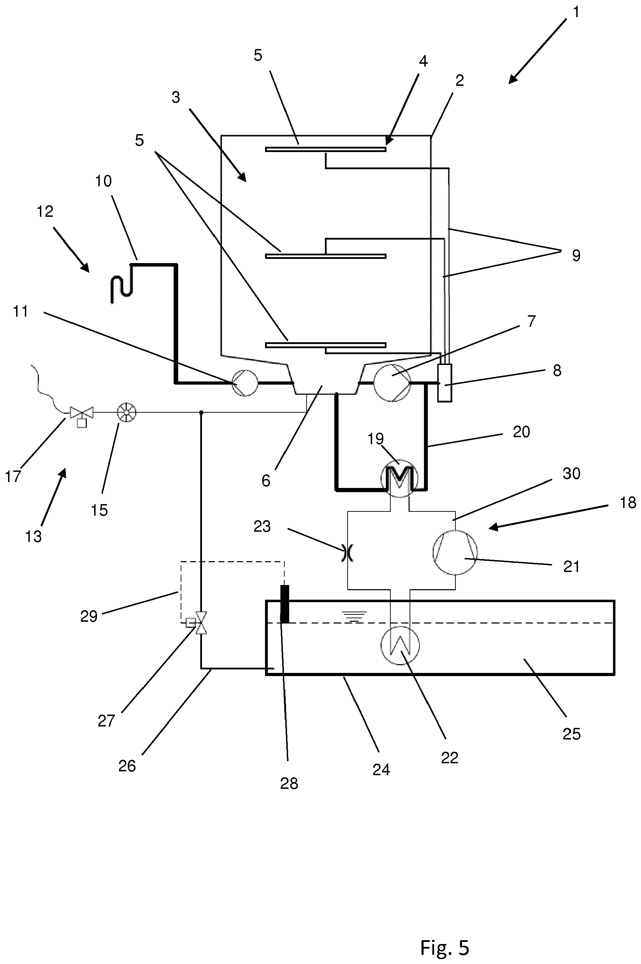

Fig. 5 lässt in schematischer Darstellung den prinzipiellen Aufbau einer Geschirrspülmaschine 1 nach dem Stand der Technik erkennen, wie er auch den erfindungsgemäßen Ausführungen gemäß der Figuren 1 bis 4 zugrunde liegt.

Die Geschirrspülmaschine 1 verfügt über ein in den Figuren nicht näher dargestelltes Gehäuse, das unter anderem einen als Spülbehälter 2 ausgebildeten Reinigungsbehälter aufnimmt. Der Spülbehälter 2 stellt seinerseits einen Reinigungsraum 3 bereit, der im bestimmungsgemäßen Verwendungsfall der Aufnahme von zu reinigendem Spülgut dient, der sog. Beladung.

Zur Beschickung von zu reinigendem Spülgut mit Reinigungsflotte dient eine Sprüheinrichtung 4, die innerhalb des Spülbehälters 2 angeordnet ist. Bevorzugterweise verfügt eine solche Sprüheinrichtung 4 über Sprüharme 5, die jeweils verdrehbar innerhalb des Spülbehälters 2 angeordnet sind.

Der Spülraum 3 mündet in einen im Detail nicht näher dargestellten Sammeltopf 6 des Spülbehälters 2 ein, an den eine Umwälzpumpe 7 strömungstechnisch angeschlossen ist. Über entsprechende Versorgungsleitungen 9 sind die Sprüharme 5 der Sprüheinrichtung 4 an die Umwälzpumpe 7 strömungstechnisch angeschlossen, und zwar unter Zwischenschaltung einer Wasserweiche 8. Im bestimmungsgemäßen Verwendungsfall kann damit eine Beschickung der Sprüheinrichtung 4 mit Reinigungsflotte mittels der Umwälzpumpe 7 stattfinden, wobei Dank der Wasserweiche 8 eine Beschickung der Sprüharme 5 wahlweise stattfinden kann.

Die Geschirrspülmaschine 1 verfügt des Weiteren über einen Ablauf 12, über den gebrauchte und nicht mehr benötigte Reinigungsflotte verworfen wird. Es ist zu diesem Zweck eine strömungstechnisch an den Sammeltopf 6 angeschlossene Ablaufleitung 10 vorgesehen, in die eine Ablaufpumpe 11 integriert ist. Sich im Sammeltopf 6 ansammelnde Reinigungsflotte kann bei eingeschalteter Pumpe 11 über die Ablaufleitung 10 abgepumpt und damit verworfen werden.

Zwecks Zuführung von Frischwasser ist ein Frischwasseranschluss 13 vorgesehen. Dieser verfügt über eine an den Sammeltopf 6 strömungstechnisch angeschlossene Frischwasserleitung 14, in die ein Flügelradzähler 15 integriert ist. Ein Ventil 17 ermöglicht ein fluiddichtes Verschließen der Frischwasserleitung 14.

Die Geschirrspülmaschine 1 verfügt des Weiteren über eine Wärmepumpeneinrichtung 18. Diese weist einen Verdichter 21, einen Verflüssiger 19, ein Expansionsorgan in Form einer Drossel 23, einen Verdampfer 22 sowie einen diese Baukomponenten strömungstechnisch miteinander verbindenden Strömungskreislauf 30 auf, in dem ein Arbeitsmedium geführt ist.

Der Verdampfer 22 ist innerhalb eines Wassertanks 24 angeordnet, der mit Wasser 25 als Wärmeträgermedium befüllt ist.

Im bestimmungsgemäßen Verwendungsfall der Wärmepumpeneinrichtung 18 findet mit Hilfe des Verflüssigers 19 ein Wärmeübertrag von dem in Strömungskreislauf 30 der Wärmepumpeneinrichtung 18 geführten Arbeitsmedium auf die Reinigungsflotte statt. Zu diesem Zweck ist ein an die Umwälzpumpe 7 angeschlossener Strömungskreislauf 20 vorgesehen, der der Spülflottenumwälzung dient. Die im Betriebsfall im Verflüssiger 19 durch Verflüssigung des Arbeitsmediums freiwerdende Wärmeenergie wird mithin auf die im Strömungskreislauf 20 umgewälzte Reinigungsflotte übertragen.

Gemäß der gezeigten Ausführungsform ist der Wassertank 24 über eine Leitung 26 an die Frischwasserleitung 14 strömungstechnisch angeschlossen, was es im Bedarfsfall gestattet, den Wassertank 24 mit Frischwasser zu befüllen. Zur Einstellung eines vorgebbaren Wasserpegels innerhalb des Wassertanks 24 ist ein Füllstandssensor 28 vorgesehen, der in kommunikationstechnischer Verbindung 29 mit einem in die Leitung 26 integrierten Ventil 27 steht.

Eine erste Ausführungsform der Erfindung ist in Fig. 1 dargestellt. In Ergänzung zur Ausgestaltung nach dem Stand der Technik gemäß Fig. 5 ist das in Fig. 1 dargestellte beispielhaft als Geschirrspülmaschine 1 ausgebildete Reinigungsgerät mit einer Überlaufleitung 31 ausgerüstet. Diese Überlaufleitung 31 verbindet den Wassertank 24 mit dem als Spülbehälter 2 ausgebildeten Reinigungsbehälter strömungstechnisch, so dass Wasser aus dem Wassertank 24 in den Spülbehälter 2 strömen kann. Der wassertankseitige Einlassstutzen 40, mit dem die Leitung 26 an den Wassertank 24 angeschlossen ist, ist dabei in Schwerkraftrichtung in einem unteren Bereich des Wassertanks 24 angeordnet. Der Auslassstutzen 41, mit dem die Überlaufleitung 31 an den Wassertank 24 angeschlossen ist, ist in Schwerkraftrichtung in einem oberen Bereich oder an einer Oberseite des Wassertanks 24 angeordnet.

Vorzugsweise ist eine Wärmedämmung auf der Oberseite 36 des Wassertanks 24 angeordnet.

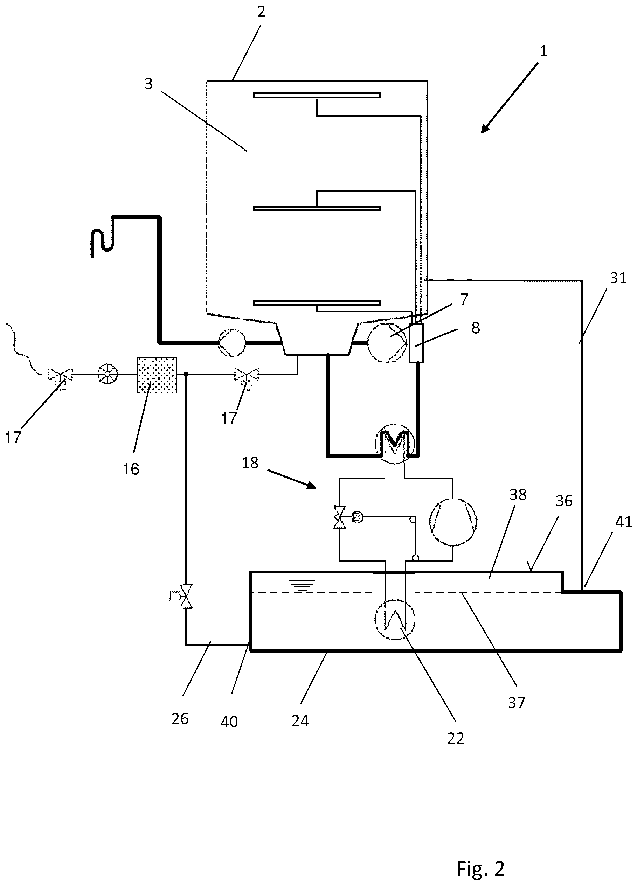

Eine gegenüber dem Ausführungsbeispiel von Fig. 1 geringfügig abgewandelte Ausführungsform zeigt Fig. 2. Bei diesem ist der Auslassstutzen, mit dem die Überlaufleitung 31 an den Wassertank 24 angeschlossen ist, derart angeordnet, dass sich, wenn es zum Überlaufen des Wassertanks 24 kommt und das überlaufende Wasser über die Überlaufleitung 31 dem Spülbehälter 2 zugeführt wird, zwischen einem maximalen Füllstand 37 und der Oberseite 36 des Wassertanks 24 ein Luftpolster 38 ausbildet. Diese sorgt für eine Wärmedämmung des Wassertanks 24 in Richtung des Spülbehälters 2, so dass optional auf eine zusätzliche außenseitige Wärmedämmung verzichtet werden kann.

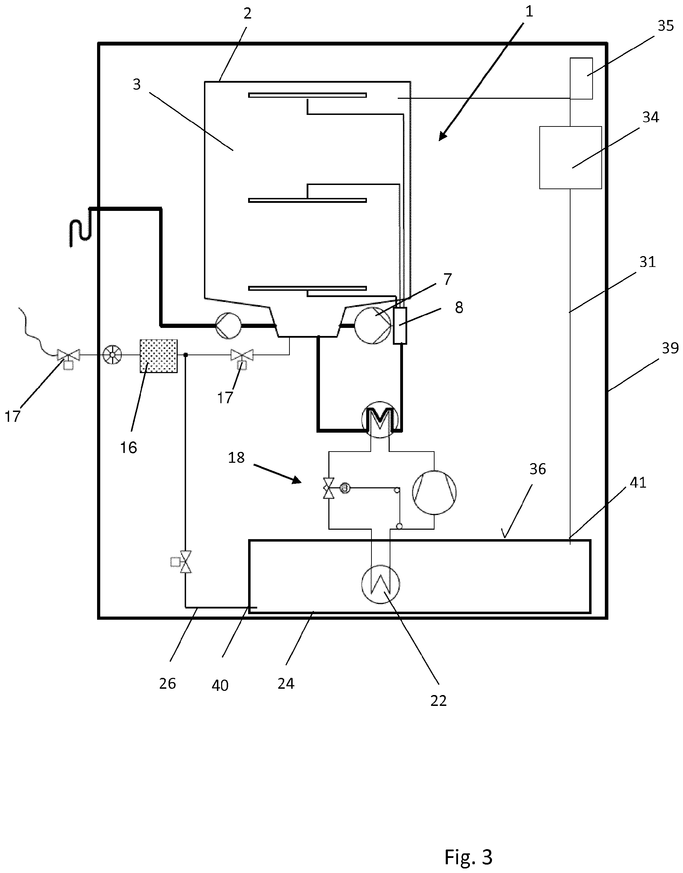

Gemäß einer weiteren Ausführungsform der Erfindung, die in Fig. 3 dargestellt ist, ist in die Überlaufleitung 31, welche den Wassertank 24 mit dem Spülbehälter 2 strömungstechnisch verbindet, so dass Wasser aus dem Wassertank 24 in den Spülbehälter 2 strömen kann, ein Ausgleichsbehälter 34 integriert. Optional verfügt die Überlaufleitung 31 über eine Labyrinthführung 35. Während der Wassertank 24 in Schwerkraftrichtung unterhalb des Spülbehälters 2 angeordnet ist, ist der Ausgleichsbehälter 34 seitlich des Spülbehälters 2, zwischen Spülbehälter 2 und dem Gehäuse 39 der Geschirrspülmaschine 1 angeordnet.

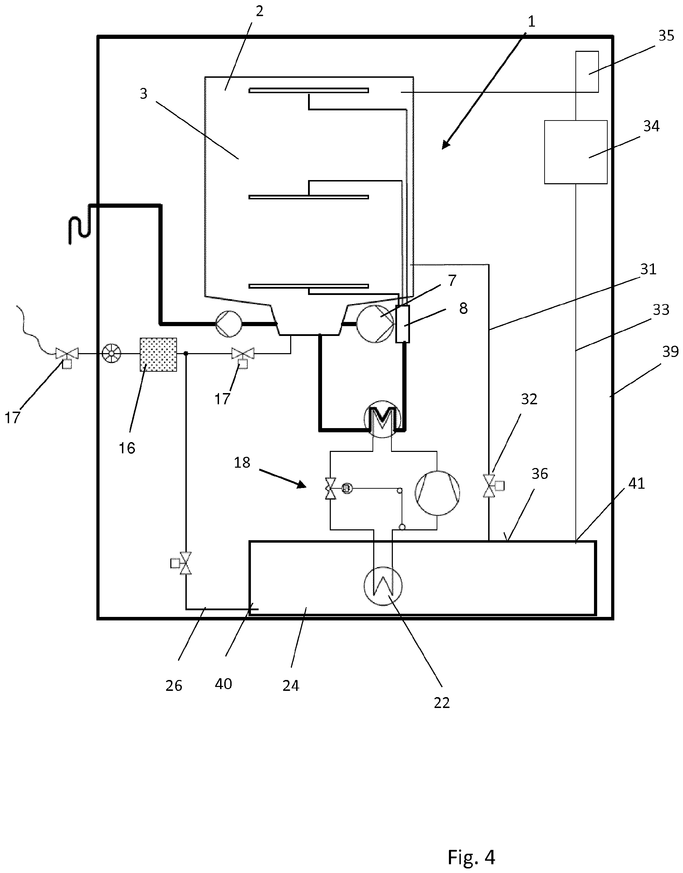

Eine gegenüber dem Ausführungsbeispiel von Fig. 3 geringfügig abgewandelte Ausführungsform zeigt Fig. 4. Dabei ist zusätzlich zu einer ersten Überlaufleitung 31, welche den Wassertank 24 mit dem als Spülbehälter 2 ausgebildeten Reinigungsbehälter strömungstechnisch verbindet, so dass Wasser aus dem Wassertank 24 in den Spülbehälter 2 strömen kann, eine zweite Überlaufleitung 33 vorgesehen, die optional - wie hier gezeigt - ebenfalls den Wassertank 24 mit dem Spülbehälter 2 strömungstechnisch verbindet. In die zweite Überlaufleitung 33 ist ein Ausgleichsbehälter 34 integriert. Des Weiteren verfügt die zweite Überlaufleitung 33 über eine Labyrinthführung 35.

In die erste Überlaufleitung 31 ist ein schaltbares Ventil 32 integriert, mittels welchem die erste Überlaufleitung 31 wahlweise fluiddicht verschlossen bzw. geöffnet werden kann.

Die in den Fig. 1 bis 4 gezeigten Ausführungsformen erlaubt eine Durchführung des erfindungsgemäßen Verfahrens wie folgt.

Vor Beginn eines Reinigungsprogramms, insbesondere eines Spülprogramms ist der Wassertank 24 aufgrund eines vorangegangenen und bereits abgeschlossenen Reinigungsprogramms vollständig mit Wasser 25 befüllt. Das Wasser 25 hat je nach zurückliegender Zeitspanne zwischen vorangegangenem Reinigungsprogramm und nunmehr zu startendem Reinigungsprogramm eine entsprechende Vorwärmtemperatur, vorzugsweise Raumtemperatur, die je nach Aufstellungsort typischerweise zwischen 15°C und 23°C liegt.

Vor Beginn eines Programmschritts, der eine Reinigungs- oder Spülflottenaufheizung vorsieht, beispielsweise dem Reinigen, wird dem Reinigungsbehälter 2 das im Wassertank 24 bevorratete, vorgewärmte Wasser 25 zugeführt. Dies geschieht dadurch, dass dem Wassertank 24 Frischwasser über die Leitung 26 zugeführt wird, so dass es zu einem Überlaufen des Wassertanks 24 kommt. Das überlaufende Wasser 25 wird dem Reinigungsbehälter 2 über die Überlaufleitung 31 zugeführt. Bei zu Beginn eines Reinigungsprogramms vollständig mit Wasser befülltem Wassertank 24 entspricht die dem Wassertank 24 zuzuführende Menge an Frischwasser der Menge an Reinigungsflotte, die zur ordnungsgemäßen Durchführung eines Reinigungsprogramms nötig ist und die dem Reinigungsbehälter als aus dem Wassertank 24 überlaufendes Wasser zugeführt wird.

Wie die Figuren 1 bis 4 erkennen lassen, ist der Einlaufstutzen der Leitung 26 im unteren Bereich des Wassertanks 24 angeordnet. Dies bedingt, dass das im Betriebsfall dem Wassertank zugeführte Frischwasser das im Wassertank 24 bevorratete Wasser 25 nach oben durch die Überlaufleitung 31 in den Spülbehälter 2 drückt. Dieser Effekt wird auch noch dadurch unterstützt, dass das dem Wassertank 24 zugeführte Frischwasser typischerweise kälter als das im Wassertank 24 bevorratete, vorgewärmte Wasser ist, weshalb das kältere Frischwasser eine höhere Dichte als das im Wassertank 24 bevorratete Wasser aufweist.

Während eines bestimmungsgemäßen Betriebs der Wärmepumpeneinrichtung 18 kann es zu einem zumindest teilweisen Einfrieren des im Wassertank 24 bevorrateten Wassers kommen. Hierdurch bedingt kommt es zu Ausdehneffekten. Ein Bersten des Tanks 24 ist gleichwohl sicher ausgeschlossen, da ausdehnungsbedingt ausgetriebenes Wasser aus dem Wassertank 24 über die Überlaufleitung 31 in den Spülbehälter 2 abströmen kann.

Das Überlaufen von Eiswasser in den Spülbehälter 2 ist allerdings insofern von Nachteil, als dass dem Wassertank 24 Wasser verloren geht. Ferner ist das Überführen von Eiswasser in den Spülbehälter 2 energetisch nicht sinnvoll. Es wird deshalb gemäß der Ausführungsform nach Fig. 3 vorgeschlagen, einen Ausgleichsbehälter 34 in die Überlaufleitung 31 zu integrieren, oder aber gemäß der Ausführungsform nach Fig. 4 eine zweite Überlaufleitung 33 vorzusehen, in die ein Ausgleichsbehälter 34 integriert ist. Kommt es infolge eines bestimmungsgemäßen Betriebs der Wärmepumpeneinrichtung zu einem Einfrieren des im Wassertank 24 bevorrateten Wassers, so kann Eiswasser bei mittels dem Ventil 32 gesperrter Überlaufleitung 31 in die zweite Überlaufleitung 33 gelangen. Dabei strömt das Eiswasser nicht in den Spülbehälter 2, sondern in den Ausgleichsbehälter 34, mittels dem das Eiswasser temporär zwischengespeichert wird. Nach einem Auftauen von sich im Wassertank 24 befindlichem Eis kann das im Ausgleichsbehälter 34 zwischengespeicherte Wasser zurück in den Wassertank 24 strömen. Gemäß dieser Konstruktion geht also weder dem Tank 24 Wasser verloren, noch kommt es zu einer Einleitung von Eiswasser in den Spülbehälter 2.

Der Wassertank 24 ist bevorzugter Weise stets vollständig mit Wasser 25 befüllt. Zwecks thermischer Isolierung des Wassertanks 24 gegenüber dem Spülbehälter 2, um einen ungewollten Wärmetransfer vom Spülbehälter 2 auf den Wassertank 24 sicher zu unterbinden, ist zwischen dem Wassertank 24 und dem Spülbehälter 2 eine Wärmedämmung ausgebildet. Im gezeigten Ausführungsbeispiel ist diese Wärmedämmung auf der Oberseite 36 des Wassertanks 24 angeordnet.

### Bezugszeichen

- 1: Reinigungsgerät bzw. Geschirrspülmaschine
- 2: Reinigungsbehälter bzw. Spülbehälter
- 3: Reinigungsraum bzw. Spülraum
- 4: Sprüheinrichtung
- 5: Sprüharm
- 6: Sammeltopf
- 7: Umwälzpumpe
- 8: Wasserweiche
- 9: Leitung
- 10: Ablaufleitung
- 11: Pumpe
- 12: Ablauf
- 13: Frischwasseranschluss
- 14: Frischwasserleitung
- 15: Flügelradzähler
- 16: Enthärter
- 17: Ventil
- 18: Wärmepumpeneinrichtung
- 19: Verflüssiger
- 20: Strömungskreislauf
- 21: Verdichter
- 22: Verdampfer
- 23: Drossel
- 24: Wassertank
- 25: Wasser
- 26: Leitung
- 27: Ventil
- 28: Füllstandssensor
- 29: kommunikationstechnische Verbindung
- 30: Strömungskreislauf
- 31: Überlaufleitung
- 32: Ventil
- 33: zweite Überlaufleitung
- 34: Ausgleichsbehälter
- 35: Labyrinthführung
- 36: Oberfläche
- 37: Füllniveau
- 38: Luftpolster
- 39: Gehäuse
- 40: Einlassstutzen
- 41: Auslassstutzen

## Patentansprüche

1. Verfahren zum Betrieb eines Reinigungsgeräts, insbesondere einer Geschirrspülmaschine (1) mit einem einen Reinigungsraum (3) bereitstellenden Reinigungsbehälter (2) und einer Wärmepumpeneinrichtung (18), die einen Verdichter (21), einen Verflüssiger (19), ein Expansionsorgan (23), einen Verdampfer (22) sowie einen diese Baukomponenten strömungstechnisch miteinander verbindenden Strömungskreislauf (30) aufweist, in dem ein Arbeitsmedium geführt ist, wobei der Verdampfer (22) innerhalb eines Wassertanks (24) angeordnet ist, wobei vor Beginn eines Programmschritts eines Reinigungsprogramms, demgemäß ein Aufheizen von im Reinigungsbehälter (2) befindlicher Reinigungsflotte stattfindet, dem Wassertank (24) Frischwasser bis zu einem Überlaufen des Wassertanks (24) zugeführt wird, wobei das überlaufende Wasser über eine Überlaufleitung (31) dem Reinigungsbehälter (2) zugeführt wird, wobei bei Betrieb der Wärmepumpeneinrichtung (18) mit Hilfe des Verflüssigers (19) ein Wärmeübertrag von dem in Strömungskreislauf (30) der Wärmepumpeneinrichtung (18) geführten Arbeitsmedium auf die Reinigungsflotte stattfindet,
**dadurch gekennzeichnet, dass**
der Wassertank (24) unterhalb des Reinigungsbehälters (2) angeordnet ist, und dass der Anschlussstutzen, mit dem die Überlaufleitung (31) an den Wassertank (24) angeschlossen ist, derart angeordnet ist, dass beim Überlaufen im Wassertank (24) stets ein Luftpolster (38) zwischen dem Wasserpegel des vom Wassertank (24) aufgenommenen Wassers und der oberen Abschlusswand (36) des Wassertanks (24) ausgebildet ist, welches Luftpolster (38) sich zumindest über einen wesentlichen Teil der oberen Abschlusswand (36) des Wassertanks (24) erstreckt.

2. Verfahren nach Anspruch 1, bei dem dem Wassertank (24) Frischwasser in einer solchen Menge zugeführt wird, dass in den Reinigungsbehälter (2) Wasser in einer Menge überläuft, dass sich im Reinigungsbehälter (2) die für eine Durchführung des Programmschrittes benötigte Menge an Reinigungsflotte ansammelt.

3. Verfahren nach einem der Ansprüche 1 bis 2, bei dem der Wassertank (24) im Betriebsfall der Wärmepumpeneinrichtung (18) in den Reinigungsbehälter (2) und/oder einen Ausgleichsbehälter (34) entwässert wird.

4. Verfahren nach einem der vorhergehenden Ansprüche, bei dem im Reinigungsbehälter, insbesondere im Sammeltopf, eine Temperaturmessung vorgenommen wird, während Wasser aus dem Wassertank in den Reinigungsbehälter, insbesondere den Sammeltopf einfließt oder unmittelbar nachdem eine erste Wassermenge aus dem Wassertank in den Reinigungsbehälter bzw. den Sammeltopf eingeflossen ist.

5. Verfahren nach dem vorhergehenden Anspruch, bei dem abhängig vom Ergebnis der Temperaturmessung in dem Reinigungsprogramm eine weitere Wassereinleitung aus dem Wassertank in den Reinigungsbehälter oder den Sammeltopf entweder unterbleibt oder die Wassereinleitung fortgesetzt wird.

6. Verfahren nach einem der Ansprüche 4 oder 5, bei dem abhängig vom Ergebnis der Temperaturmessung entweder im nachfolgenden Programmschritt des Reinigungsprogramms die Wärmepumpeneinrichtung betrieben wird, um die Reinigungsflotte aufzuheizen, oder ein Betrieb der Wärmepumpeneinrichtung in dem Reinigungsprogramm unterbleibt.

7. Reinigungsgerät, insbesondere Geschirrspülmaschine, zur Durchführung eines Verfahrens nach einem der vorhergehenden Ansprüche, mit einem einen Reinigungsraum (3) bereitstellenden Reinigungsbehälter (2) und einer Wärmepumpeneinrichtung (18), die einen Verdichter (21), einen Verflüssiger (19), ein Expansionsorgan (23), einen Verdampfer (22) sowie einen diese Baukomponenten strömungstechnisch miteinander verbindenden Strömungskreislauf (30) aufweist, in dem ein Arbeitsmedium geführt ist, wobei der Verdampfer (22) innerhalb eines Wassertanks (24) angeordnet ist, wobei der Wassertank (24) an eine Frischwasserzufuhr einerseits und an eine in den Reinigungsbehälter (2) mündende Überlaufleitung (31, 33) andererseits strömungstechnisch angeschlossen ist,
wobei bei Betrieb der Wärmepumpeneinrichtung (18) mit Hilfe des Verflüssigers (19) ein Wärmeübertrag von dem in Strömungskreislauf (30) der Wärmepumpeneinrichtung (18) geführten Arbeitsmedium auf die Reinigungsflotte stattfinden kann,
wobei der Wassertank (24) unterhalb des Reinigungsbehälters (2) angeordnet ist, und der Anschlussstutzen, mit dem die Überlaufleitung (31) an den Wassertank (24) angeschlossen ist, derart angeordnet ist, dass im Wassertank (24) stets ein Luftpolster (38) zwischen dem Wasserpegel des vom Wassertank (24) aufgenommenen Wassers und der oberen Abschlusswand (36) des Wassertanks (24) ausgebildet ist, welches Luftpolster (38) sich zumindest über einen wesentlichen Teil der oberen Abschlusswand (36) des Wassertanks (24) erstreckt..

8. Reinigungsgerät nach Anspruch 7,
**dadurch gekennzeichnet, dass**
die Überlaufleitung (31) fluiddicht verschließbar ist.

9. Reinigungsgerät nach Anspruch 7 oder 8,
**dadurch gekennzeichnet, dass**
der Wassertank (24) an eine zweite, insbesondere in den Reinigungsbehälter (2) mündende, Überlaufleitung (33) strömungstechnisch angeschlossen ist.

10. Reinigungsgerät nach einem der Ansprüche 7 bis 9,
**dadurch gekennzeichnet, dass**
in eine oder die Überlaufleitung (31, 33) ein Ausgleichsbehälter (34) integriert ist, welche Überlaufleitung vorzugsweise in den Reinigungsbehälter (2) mündet.

11. Reinigungsgerät nach Anspruch 10,
**dadurch gekennzeichnet, dass**
der Ausgleichsbehälter (34) zumindest größtenteils seitlich des Reinigungsbehälters (2) im Spaltraum zwischen Reinigungsbehälter (2) und dem Gehäuse (39) der Reinigungsgeräts (1) angeordnet ist.

12. Reinigungsgerät nach Anspruch 10 oder 11,
**dadurch gekennzeichnet, dass**
der Ausgleichsbehälter (34) auf seiner dem Reinigungsbehälter (2) zugewandten Seite eine Isolierung aufweist.

13. Reinigungsgerät nach einem der Ansprüche 10 bis 12,
**dadurch gekennzeichnet, dass**
der Ausgleichsbehälter (34) wärmeleitend mit dem Gehäuse (39) der Reinigungsgeräts (1) verbunden ist.

14. Reinigungsgerät nach einem der Ansprüche 10 bis 13,
**dadurch gekennzeichnet, dass**
der Ausgleichsbehälter (34) ein Volumen von mindestens 1 00ml, vorzugsweise ein Volumen zwischen 250 und 450 ml, aufweist.

## Claims

1. Method for operating a cleaning appliance, in particular a dishwasher (1), comprising a cleaning container (2) which provides a cleaning chamber (3) and comprising a heat pump device (18) which has a compressor (21), a condenser (19), an expansion element (23), an evaporator (22) and a flow circuit (30) which fluidically interconnects these structural components, in which circuit a working medium is guided, the evaporator (22) being arranged within a water tank (24), the water tank (24), before the start of a program step of a cleaning program, according to which cleaning solution is heated in the cleaning container (2), being supplied with fresh water until the water tank (24) overflows, the overflowing water being supplied to the cleaning container (2) via an overflow line (31), heat being transferred by means of the condenser (19) from the working medium guided in the flow circuit (30) of the heat pump device (18) to the cleaning solution during operation of the heat pump device (18), **characterised in that** the water tank (24) is arranged below the cleaning container (2), and **in that** the connecting piece, by means of which the overflow line (31) is connected to the water tank (24), is arranged such that in the event of an overflow, an air cushion (38) is always formed in the water tank (24) between the water level of the water received by the water tank (24) and the upper end wall (36) of the water tank (24), which air cushion (38) extends over at least a substantial part of the upper end wall (36) of the water tank (24).

2. Method according to claim 1, wherein fresh water is supplied to the water tank (24) in such an amount that water overflows into the cleaning container (2) in such an amount that the amount of cleaning solution required for carrying out the program step accumulates in the cleaning container (2).

3. Method according to either claim 1 or claim 2, wherein the water tank (24) is drained into the cleaning container (2) and/or a compensation container (34) during operation of the heat pump device (18).

4. Method according to any of the preceding claims, wherein the temperature is measured in the cleaning container, in particular in the collecting vessel, while water flows from the water tank into the cleaning container, in particular into the collecting vessel, or immediately after a first amount of water has flowed from the water tank into the cleaning container or into the collection vessel.

5. Method according to the preceding claim, wherein, depending on the result of the temperature measurement, either a further introduction of water from the water tank into the cleaning container or into the collecting vessel is omitted from the cleaning program, or the introduction of water is continued.

6. Method according to either claim 4 or claim 5, wherein, depending on the result of the temperature measurement, either the heat pump device is operated in the subsequent program step of the cleaning program in order to heat the cleaning solution, or operation of the heat pump device is omitted from the cleaning program.

7. Cleaning appliance, in particular a dishwasher, for carrying out a method according to any of the preceding claims, comprising a cleaning container (2) which provides a cleaning chamber (3) and comprising a heat pump device (18) which has a compressor (21), a condenser (19), an expansion element (23), an evaporator (22) and a flow circuit (30) which fluidically interconnects these structural components, in which circuit a working medium is guided, wherein the evaporator (22) is arranged within a water tank (24), wherein the water tank (24) is fluidically connected on one side to a fresh water supply and on the other side to an overflow line (31, 33) which opens into the cleaning container (2), wherein heat can be transferred by means of the condenser (19) from the working medium guided in the flow circuit (30) of the heat pump device (18) to the cleaning solution during operation of the heat pump device (18), wherein the water tank (24) is arranged below the cleaning container (2), and the connecting piece, by means of which the overflow line (31) is connected to the water tank (24), is arranged such that an air cushion (38) is always formed in the water tank (24) between the water level of the water received by the water tank (24) and the upper end wall (36) of the water tank (24), which air cushion (38) extends over at least a substantial part of the upper end wall (36) of the water tank (24).

8. Cleaning appliance according to claim 7, **characterised in that** the overflow line (31) can be closed in a fluid-tight manner.

9. Cleaning appliance according to either claim 7 or claim 8, **characterised in that** the water tank (24) is fluidically connected to a second overflow line (33) which in particular opens into the cleaning container (2).

10. Cleaning appliance according to any of claims 7 to 9, **characterised in that** a compensation container (34) is integrated in one/the overflow line (31, 33), which overflow line preferably opens into the cleaning container (2).

11. Cleaning appliance according to claim 10, **characterised in that** the compensation container (34) is arranged at least for the most part at the side of the cleaning container (2), in the gap between the cleaning container (2) and the housing (39) of the cleaning appliance (1).

12. Cleaning appliance according to either claim 10 or claim 11, **characterised in that** the compensation container (34) has insulation on the side thereof that faces the cleaning container (2).

13. Cleaning appliance according to any of claims 10 to 12, **characterised in that** the compensation container (34) is connected to the housing (39) of the cleaning appliance (1) in a heat-conducting manner.

14. Cleaning appliance according to any of claims 10 to 13, **characterised in that** the compensation container (34) has a volume of at least 100 ml, preferably a volume between 250 and 450 ml.

## Revendications

1. Procédé permettant de faire fonctionner un appareil de nettoyage, en particulier un lave-vaisselle (1), comportant un réservoir de nettoyage (2) doté d'un espace de nettoyage (3) et un dispositif de pompe à chaleur (18) qui comporte un compresseur (21), un condensateur (19), un organe de détente (23), un évaporateur (22) ainsi qu'un circuit d'écoulement (30) qui relie fluidiquement ces composants et qui guide un fluide de travail, l'évaporateur (22) étant disposé à l'intérieur d'un réservoir d'eau (24), de l'eau fraîche étant amenée au réservoir d'eau (24) jusqu'à un débordement du réservoir d'eau (24) avant le début d'une étape de programme d'un programme de nettoyage, selon lequel un chauffage de la liqueur de nettoyage se trouvant dans le réservoir de nettoyage (2) se produit, l'eau qui déborde étant amenée par une conduite de trop-plein (31) au réservoir de nettoyage (2), un transfert de chaleur du fluide de travail amené dans le circuit d'écoulement (30) du dispositif de pompe à chaleur (18) à la liqueur de nettoyage étant effectué à l'aide du condensateur (19) lors du fonctionnement dudit dispositif de pompe à chaleur (18), **caractérisé en ce que** le réservoir d'eau (24) est disposé sous le réservoir de nettoyage (2), et **en ce que** le raccord, à l'aide duquel la conduite de trop-plein (31) est reliée au réservoir d'eau (24), est disposé de telle manière que, lors du débordement dans le réservoir d'eau (24), un coussin d'air (38) se forme toujours entre l'indicateur de niveau d'eau de l'eau reçue par le réservoir d'eau (24) et la paroi de fermeture supérieure (36) du réservoir d'eau (24), lequel coussin d'air (38) s'étend au moins sur une partie substantielle de la paroi de fermeture supérieure (36) du réservoir d'eau (24).

2. Procédé selon la revendication 1, de l'eau fraîche étant amenée au réservoir d'eau (24) en une quantité telle que l'eau déborde dans le réservoir de nettoyage (2) en une quantité telle que la quantité de liqueur de nettoyage nécessaire à la réalisation de l'étape de programme s'accumule dans le réservoir de nettoyage (2).

3. Procédé selon l'une des revendications 1 à 2, le réservoir d'eau (24) étant vidangé, en cas de fonctionnement du dispositif de pompe à chaleur (18), dans le réservoir de nettoyage (2) et/ou dans un réservoir de compensation (34).

4. Procédé selon l'une des revendications précédentes, dans lequel une mesure de température est effectuée dans le réservoir de nettoyage, en particulier dans le bac collecteur, tandis que de l'eau s'écoule du réservoir d'eau dans le réservoir de nettoyage, en particulier dans le bac collecteur, ou immédiatement après qu'une première quantité d'eau s'est écoulée du réservoir d'eau dans le réservoir de nettoyage et/ou dans le bac collecteur.

5. Procédé selon la revendication précédente, dans lequel, en fonction du résultat de la mesure de température dans le programme de nettoyage, soit le déversement d'eau du réservoir d'eau dans le réservoir de nettoyage ou dans le bac collecteur n'a plus lieu, soit le déversement d'eau est poursuivi.

6. Procédé selon l'une des revendications 4 ou 5, dans lequel, en fonction du résultat de la mesure de température, soit le dispositif de pompe à chaleur est actionné dans l'étape de programme suivante du programme de nettoyage pour chauffer la liqueur de nettoyage, soit le dispositif de pompe à chaleur n'est pas actionné dans le programme de nettoyage.

7. Appareil de nettoyage, en particulier lave-vaisselle, pour la mise en œuvre d'un procédé selon l'une des revendications précédentes, comportant un réservoir de nettoyage (2) doté d'un espace de nettoyage (3) et un dispositif de pompe à chaleur (18) qui comporte un compresseur (21), un condenseur (19), un organe de détente (23), un évaporateur (22) ainsi qu'un circuit d'écoulement (30) qui relie fluidiquement ces composants et qui guide un fluide de travail, l'évaporateur (22) étant disposé à l'intérieur d'un réservoir d'eau (24), le réservoir d'eau (24) étant relié fluidiquement à une alimentation en eau fraîche d'une part et à une conduite de trop-plein (31, 33) qui débouche dans le réservoir de nettoyage (2) d'autre part, un transfert de chaleur du fluide de travail amené dans le circuit d'écoulement (30) du dispositif de pompe à chaleur (18) à la liqueur de nettoyage pouvant être effectué à l'aide du condensateur (19) lors du fonctionnement dudit dispositif de pompe à chaleur (18), le réservoir d'eau (24) étant disposé sous le réservoir de nettoyage (2), et le raccord, à l'aide duquel la conduite de trop-plein (31) est reliée au réservoir d'eau (24), étant disposé de telle manière que, dans le réservoir d'eau (24), un coussin d'air (38) se forme toujours entre l'indicateur de niveau d'eau de l'eau reçue par le réservoir d'eau (24) et la paroi de fermeture supérieure (36) du réservoir d'eau (24), lequel coussin d'air (38) s'étend au moins sur une partie substantielle de la paroi de fermeture supérieure (36) du réservoir d'eau (24).

8. Appareil de nettoyage selon la revendication 7, **caractérisé en ce que** la conduite de trop-plein (31) peut être fermée de manière étanche aux fluides.

9. Appareil de nettoyage selon la revendication 7 ou 8, **caractérisé en ce que** le réservoir d'eau (24) est fluidiquement relié à une seconde conduite de trop-plein (33), qui débouche en particulier dans le réservoir de nettoyage (2).

10. Appareil de nettoyage selon l'une des revendications 7 à 9, **caractérisé en ce qu'**un réservoir de compensation (34) est intégré dans l'une ou la conduite de trop-plein (31, 33), lequel réservoir de compensation débouche de préférence dans le réservoir de nettoyage (2).

11. Appareil de nettoyage selon la revendication 10, **caractérisé en ce que** le réservoir de compensation (34) est disposé au moins en grande partie latéralement par rapport au réservoir de nettoyage (2) dans l'espace en fente entre le réservoir de nettoyage (2) et le boîtier (39) de l'appareil de nettoyage (1).

12. Appareil de nettoyage selon la revendication 10 ou 11, **caractérisé en ce que** le réservoir de compensation (34) présente une isolation sur son côté orienté vers le réservoir de nettoyage (2).

13. Appareil de nettoyage selon l'une des revendications 10 à 12, **caractérisé en ce que** le réservoir de compensation (34) est relié de manière thermoconductrice au boîtier (39) de l'appareil de nettoyage (1).

14. Appareil de nettoyage selon l'une des revendications 10 à 13, **caractérisé en ce que** le réservoir de compensation (34) présente un volume d'au moins 100 ml, de préférence un volume compris entre 250 et 450 ml.
